Europäisches Patentamt

European Patent Office

Office européen des brevets

(19)

(11) Publication number: **0 182 758**

**B1**

# EUROPEAN PATENT SPECIFICATION

(45) Date of publication of the patent specification:
19.04.89

(51) Int. Cl.⁴: **H 01 H 35/18,** G 01 F 23/36

(21) Application number: **85850331.1**

(22) Date of filling: **22.10.85**

(54) **Level sensor.**

(30) Priority: **13.11.84 SE 8405669**

(43) Date of publication of application:
**28.05.86 Bulletin 86/22**

(45) Publication of the grant of the patent:
**19.04.89 Bulletin 89/16**

(84) Designated Contracting States:
**AT DE FR GB IT NL SE**

(56) References cited:
**AT-B-277 361**
**DE-C-572 733**
**US-A-3 183 323**

(73) Proprietor: **Flygt AB, Box 1309, S-171 25 Solna (SE)**

(72) Inventor: **Morin, Anders, Uggelvägen 3, S-131 47 Nacka (SE)**
Inventor: **Nilsson, Mikael, Sparrisgängen 38, S-611 45 Nyköping (SE)**

(74) Representative: **Larsson, Sten, Flygt AB Box 1309, S-171 25 Solna (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

## Description

This invention concerns an electric level sensor for detecting the liquid level in a tank and depending on that level giving a signal to a unit for control of different functions. Particularly the invention is meant to be used in sewage water pump stations for starting/stopping pumps, initiating alarm etc.

Level sensors for this purpose are previously known and which have the form of an independantly suspended water tight hollow body which has its weight so distributed that the body takes different angles of inclination with reference to the vertical line depending on if it is surrounded by a liquid or air. A mercury switch within the body is then arranged to close/open an electric circuit in dependance of the inclination. Such a level sensor is US-A-3 183 323.

A disadvantage with the level sensors described above is that the sensor is relatively expensive to manufacture and that mercury for environment reasons may not be allowed in many applications. Pollutions in the liquid may also be collected on the sensor in such a way that its inclination can be influenced, thus obtaining a wrong function.

Another level sensor is shown in AT-A-277 361, where an electric switch is used instead of mercury contacts. Said sensor is also very sensitive to pollutions as it takes different inclinations in dependance of varying water levels.

According to the invention the problem to manufacture a reliable level sensor, mainly used in sewage pump stations is solved, by help of the device stated in the claims.

The invention is described more closely below with reference to the enclosed drawings.

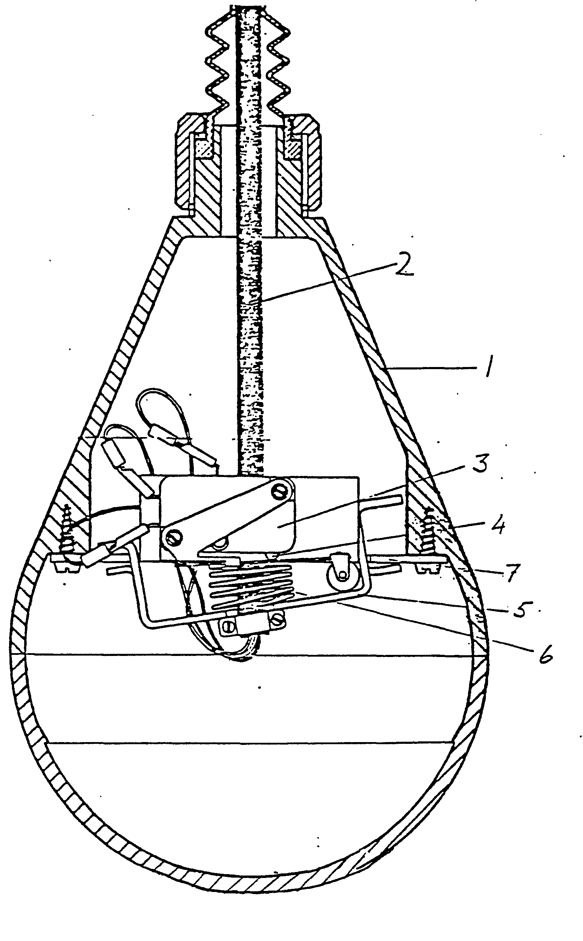

In the drawing 1 stands for a hollow body, 2 for an electric cable, 3 for an electric switch having a contact plunge 4, 5 for an actuating lever, 6 for a spring and 7 for an intermediate bridge.

The hollow body 1 is suspended from the electric cable 2, the lead-in being water-tight and resiliant so that the cable may be moved a short distance in its axial direction within the lead-in.

The cable 2, within the body 1, is connected to the switch 3 which is mounted on the bridge 7. The cable is urged by the spring 6 in the direction away from the switch 3.

The spring force is so adapted with reference to the weight of the body, that the lever takes two distinct positions when the body is surrounded by a liquid and air resp. In the drawing the sensor is shown surrounded by air. Here the gravity is so strong that the spring is compressed and the plunge 4 urged inwards, thus opening the circuit in the switch. This indicates that the liquid level is below the sensor.

If on the other hand the body 1 is surrounded by liquid, the gravity decreases thus giving the lever a maximum elevation and letting the plunger 4 leave its inner position obtaining a closure of the switch. Here is indicated that the liquid level is on a level with or above the sensor.

By a suitable adaption of the weight of the body and the spring force with reference to the viscosity of the liquid, it is possible to obtain two very distinctive positions which indicate the liquid level. The signals received can for instance be used for starting/stopping an electrically driven pump.

In the discription above the designations "closed" and "open" resp for the switch 3 are used when the liquid level is above and below the sensor resp. It is however obvious that the switch could be so designed that a closed position means a liquid level below the sensor and that an open position means a liquid level above the sensor.

## Claims

1. A level sensor for disconnection/connection of an electric device, for instance the motor of a pump, which sensor comprises a hollow body (1) suspended from an electric cable (2), and an electric switch (3) within the hollow body and fixed thereto, which switch opens or closes its contacts depending on whether the liquid level reaches the sensor or not, characterized in that the hollow body (1) is movable in relation to the cable in the axial direction, in that the actuating lever (5) of the switch (3) is fixed to the cable (2) and spring loaded with respect to the switch, the weight/volume relation of the hollow body (1) in air and liquid resp and the spring load being so dimensioned, that the switch takes an open/closed position when the hollow body (1) is surrounded by air and a closed/open position when the sensor is entirely or partly surrounded by liquid.

2. A level sensor according to claim 1, characterized in, that the switch (3) has an actuating plunger (4) acted upon by the spring loaded lever (5) to the open/closed position.

## Patentansprüche

1. Füllstandfühler zum Ausschalten/Einschalten einer elektrischen Vorrichtung, z. B. des Motors einer Pumpe, mit einem hohlen Körper (1), der von einem elektrischen Kabel (2) herabhängt, und mit einem elektrischen Schalter (3), der sich innerhalb des hohlen Körpers befindet sowie an diesem befestigt ist, wobei der Schalter seine Kontakte in Abhängigkeit davon öffnet oder schließt, ob der Flüssigkeitsstand den Fühler erreicht oder nicht, dadurch gekennzeichnet, daß der hohle Körper (1) in Axialrichtung relativ zu dem Kabel beweglich ist, daß der Betätigungshebel (5) des Schalters (3) an dem Kabel (2) angebracht ist und in bezug auf den Schalter unter Federspannung steht, wobei das Gewichts-/Volumen-Verhältnis des hohlen Körpers (1) in Luft bzw. Flüssigkeit sowie die Federspannung derart dimensioniert sind, daß der Schalter eine geöffnete/geschlossene Stellung einnimmt, wenn der hohle Körper (1) von Luft umgeben ist, und eine geschlossene/geöffnete Stellung einnimmt, wenn der Fühler ganz oder teilweise von Flüssigkeit umgeben ist.

2. Füllstandfühler nach Anspruch 1, dadurch gekennzeichnet, daß der Schalter (3) einen Betätigungskolben (4) aufweist, der von dem unter Federspannung stehenden Hebel (5) in Richtung auf die geöffnete/geschlossene Stellung beaufschlagt wird.

## Revendications

1. Capteur de niveau pour le branchement/débranchement d'un dispositif électrique, par exemple le moteur d'une pompe, lequel capteur comporte un corps creux (1) suspendu à un câble électrique (2), et un interrupteur électrique (3) situé à l'intérieur du corps creux et fixé à ce dernier, les contacts de l'interrupteur s'ouvrant ou se fermant selon que le niveau du liquide atteint le capteur ou non, caractérisé en ce que le corps creux (1) est déplaçable dans la direction axiale par rapport au câble, que le levier d'actionnement (5) de l'interrupteur (3) est fixé au câble (2) et est chargé par un ressort par rapport à l'interrupteur, la relation poids/volume du corps creux (1) respectivement dans l'air et dans le liquide et la charge appliquée par le ressort étant dimensionnées de telle sorte que l'interrupteur prend une position ouverte/fermée lorsque le corps creux (1) est entouré par l'air et une position fermée/ouverte lorsque le capteur est entièrement ou partiellement entouré par le liquide.

2. Capteur de niveau selon la revendication 1, caractérisé en ce que l'interrupteur (3) comporte une tige d'actionnement (4), sur laquelle le levier (5) chargé par un ressort agit pour amener l'interrupteur dans la position ouverte/fermée.